# EUROPEAN PATENT SPECIFICATION

(11) **EP 4 650 205 B1**
(45) Date of publication and mention of the grant of the patent: **22.04.2026**
(21) Application number: 24175577.6
(22) Date of filing: 14.05.2024
(51) Int. Cl.: B60K 28/08, G01C 21/34

(54) **MANAGING LOADED CARGO IN A VEHICLE**
VERWALTUNG VON BELADENER FRACHT IN EINEM FAHRZEUG
GESTION DE CHARGEMENT CHARGÉ DANS UN VÉHICULE

(43) Date of publication of application: 19.11.2025
(73) Proprietor: VOLVO TRUCK CORPORATION, 405 08 Göteborg (SE)
(72) Inventor: BRUN, Arnaud, 69007 LYON (FR); SEVENIER, Fanette, 69690 COURZIEU (FR)
(74) Representative: Ström & Gulliksson AB

(56) References cited:
- DE-A1- 102019 219 376
- DE-B3- 102022 210 373
- DE-T5- 112017 001 945
- US-A1- 2022 402 482
- US-A1- 2023 004 158

## Description

### TECHNICAL FIELD

The disclosure relates generally to cargo management. In particular aspects, the disclosure relates to managing loaded cargo in a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the field of vehicle cargo management, existing systems have often been limited to the passive monitoring of cargo within a cargo space, alerting users to movement without providing actionable responses. These systems lack the capability to adapt to the varying conditions of transit, such as changes in vehicle speed, road terrain, and driving maneuvers, which can all influence cargo stability. The static nature of these solutions means they do not consider the real-time operational context of the vehicle, potentially leading to inefficient and ineffective management of cargo movement. Furthermore, the implementation of sensor technology in these systems typically does not extend beyond simple detection, failing to offer preventive measures or control strategies that could mitigate the risk of cargo displacement. This gap highlights a need for an intelligent, dynamic approach to cargo management that can anticipate and actively respond to potential cargo shifts.

DE 10 2019 219 376 A1 describes a method for adjusting a vehicle's trajectory and driving characteristics based on data from sensors within a cargo area. The system classifies a load and modifies the vehicle's trajectory and driving behavior, such as speed and braking, when a load shift exceeding a threshold is detected. The vehicle may operate with varying levels of automation, from assisted to fully automated.

DE 11 2017 001 945 T5 describes a system for monitoring a cargo space of a goods vehicle using detectors to assess the cargo state. The system determines a recommended speed for safe driving based on the cargo's condition and communicates this to the driver, potentially including automatic adjustments to the vehicle's speed control systems.

### SUMMARY

According to a first aspect of the disclosure, there is provided a computer system comprising processing circuitry according to claim 1. The processing circuitry is configured to obtain sensing data from a sensor monitoring a cargo space of a vehicle; determine, based on the sensing data, that at least a portion of a cargo in the cargo space is moved a threshold distance of the cargo space during operation of the vehicle; determine at least one preventive action to be carried out by the vehicle to prevent further movement of the cargo with respect to the threshold distance, the at least one preventive action comprising a driving route; and control the vehicle to at least partially carry out the at least one preventive action. The first aspect of the disclosure may seek to mitigate the risk of cargo damage and improve safety by actively managing cargo movement at a vehicle's cargo space through sensing and autonomous corrective actions. A technical benefit may include enhanced transportation efficiency by reducing the need for manual cargo checks and potential transport delays, as well as the improvement of vehicle operation with regards to route planning and cargo stability.

Optionally in some examples, including in at least one preferred example, the processing circuitry is configured to determine the driving route by at least selecting or omitting one or more route segments from the driving route. A technical benefit may include the ability to improve the driving route for safety and efficiency by avoiding areas that may cause cargo movement or disrupt vehicle operation.

Optionally in some examples, including in at least one preferred example, the processing circuitry is further configured to at least select or omit said one or more route segments based on one or more of a vehicle type of the vehicle, a road condition for the driving route, topology data for the driving route, traffic data for the driving route, and safety and regulatory data for the driving route. A technical benefit may include the customization of the driving route based on specific vehicle capabilities and current road conditions, ensuring a safer transit for the cargo.

Optionally in some examples, including in at least one preferred example, the at least one preventive action comprises a suspension control action, a speed control action, an acceleration control action, a brake control action, a yaw control action, a turn control action, an anti-slip control action, or a hydraulic leveling action, wherein controlling the vehicle to at least partially carry out the preventive action causes counteraction of further movement of the cargo. A technical benefit may include the direct mitigation of factors that could lead to cargo instability through targeted vehicle adjustments.

Optionally in some examples, including in at least one preferred example, the processing circuitry is further configured to, in response to determining that at least a portion of the cargo in the cargo space is moved a threshold distance with respect to the cargo space during operation of the vehicle, cause emission of one or more of an audible alert, visual cue, and tactile indicator. A technical benefit may include the immediate notification of cargo movement to the driver or environment, allowing for prompt corrective measures to be taken.

Optionally in some examples, including in at least one preferred example, the processing circuitry is configured to control the vehicle to at least partially carry out the at least one preventive action by causing autonomous driving of the vehicle to follow the determined driving route. A technical benefit may include reducing the driver's workload by allowing the vehicle to automatically adjust its path to maintain cargo safety.

Optionally in some examples, including in at least one preferred example, the processing circuitry is configured to control the vehicle to at least partially carry out the at least one preventive action by transmitting the driving route to a driver of the vehicle via a user interface. A technical benefit may include keeping the driver informed of a recommended route for cargo stability, enhancing driver control and decision-making.

Optionally in some examples, including in at least one preferred example, the processing circuitry is further configured to determine at least one preventive action to be carried out by the vehicle to prevent further movement of the cargo with respect to the threshold distance by identifying a discrepancy between reference sensing data, indicating an expected safe placement of the cargo, and the sensing data. A technical benefit may include the accurate detection of cargo displacement and the timely initiation of corrective actions, reducing the risk of cargo damage.

Optionally in some examples, including in at least one preferred example, the sensor monitors an outer boundary of the cargo space, wherein the threshold distance pertains to the outer boundary. A technical benefit may include the precise monitoring of cargo position relative to the cargo space boundaries, ensuring the cargo remains within a defined safe area.

Optionally in some examples, including in at least one preferred example, the sensor comprises a plurality of sensors, each one of the plurality of sensors monitoring a respective outer boundary comprising at least two of a first outer lateral boundary, a second outer lateral boundary different from the first outer lateral boundary, a rear outer boundary, and a front outer boundary, wherein the threshold distance pertains to each of the monitored outer boundaries. A technical benefit may include comprehensive coverage of the cargo space for enhanced detection of cargo movement in any direction.

According to the invention the processing circuitry is further configured to set the threshold distance based on one or more of a type of cargo, a type of cargo space, and a mounting position of the sensor. A technical benefit may include the adaptable setting of safety thresholds to accommodate various cargo types and configurations, improving the versatility of the cargo monitoring system.

According to a second aspect of the disclosure, there is provided a vehicle comprising the computer system of the first aspect. The second aspect of the disclosure may seek to integrate cargo monitoring capabilities into the vehicle itself to provide a comprehensive solution that ensures cargo integrity and addresses vehicle operational challenges. A technical benefit may include the seamless incorporation of the monitoring system into the vehicle's architecture, allowing for more robust and responsive cargo management, as well as the potential for improved vehicle handling and safety due to the ability to preemptively adjust to cargo movement.

According to a third aspect of the disclosure, there is provided a computer-implemented method according to claim 13. The method comprises obtaining, by processing circuitry of a computer system, sensing data from a sensor monitoring a cargo space of a vehicle; determining, by the processing circuitry, based on the sensing data, that at least a portion of a cargo in the cargo space is moved a threshold distance of the cargo space during operation of the vehicle; determining, by the processing circuitry, at least one preventive action to be carried out by the vehicle to prevent further movement of the cargo with respect to the threshold distance, the at least one preventive action comprising a driving route; and controlling, by the processing circuitry, the vehicle to at least partially carry out the at least one preventive action. The third aspect of the disclosure may seek to mitigate the risk of cargo damage and improve safety by actively managing cargo movement at a vehicle's cargo space through sensing and autonomous corrective actions. A technical benefit may include enhanced transportation efficiency by reducing the need for manual cargo checks and potential transport delays, as well as the improvement of vehicle operation with regards to route planning and cargo stability.

According to a fourth aspect of the disclosure, there is provided a computer program product comprising program code for performing, when executed by processing circuitry, the method of the third aspect. The fourth aspect of the disclosure may seek to provide a digital solution in the form of a computer program product that, when implemented, equips the vehicle's processing circuitry with the necessary software to execute the advanced cargo monitoring and management method. A technical benefit may include the flexibility of software deployment across different vehicle systems, allowing for updates and enhancements to be made without the need for physical modifications to the vehicle, leading to improved adaptability and scalability of the cargo monitoring system.

According to a fifth aspect of the disclosure, there is provided a non-transitory computer-readable storage medium comprising instructions, which when executed by processing circuitry, cause the processing circuitry to perform the method of the third aspect. The fifth aspect of the disclosure may seek to offer a tangible medium that stores the executable instructions for the cargo management method, ensuring that the vehicle's processing circuitry can reliably perform the necessary steps to monitor and respond to cargo movement. A technical benefit may include the reliability and security afforded by having a dedicated storage medium, which ensures consistent performance of the cargo monitoring system and reduces the dependency on external networks or systems that might be susceptible to connectivity issues or cyber threats.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary side view illustration of a vehicle comprising a tractor unit and a trailing unit with a cargo space according to one example.
**FIG. 2** is an exemplary top view illustration of a vehicle comprising a tractor unit and a trailing unit with a cargo space according to one example.
**FIG. 3** is an exemplary schematic block diagram of exemplary preventative actions.
**FIG. 4** is an exemplary schematic block diagram of exemplary data upon which a threshold distance can be based.
**FIG. 5A** is an exemplary top view illustration of an operational scenario of a vehicle according to one example.
**FIG. 5B** shows the illustration of **FIG. 5A** where cargo has moved beyond a threshold distance in a lateral direction from the cargo space according to one example.
**FIG. 5C** shows the illustration of **FIG. 5B** where a preventive action has been at least partially carried out for counteracting the cargo movement.
**FIG. 6A** is an exemplary top view illustration of an operational scenario of a vehicle according to one example.
**FIG. 6B** shows the illustration of **FIG. 6A** where cargo has moved beyond a threshold distance in two lateral directions from the cargo space according to one example.
**FIG. 6C** shows the illustration of **FIG. 6B** where a preventive action has been at least partially carried out for counteracting the cargo movement.
**FIG. 7** is an exemplary top view illustration of an operational scenario of a vehicle according to one example where cargo has moved beyond a threshold distance in a rear direction from the cargo space according to one example.
**FIG. 8A** is an exemplary top view illustration of an operational scenario of a vehicle according to one example.
**FIG. 8B** shows the illustration of **FIG. 8A** where cargo has moved beyond a threshold distance a front direction from the cargo space according to one example.
**FIG. 8C** shows the illustration of **FIG. 8B** where a preventive action has been at least partially carried out for counteracting the cargo movement.
**FIG. 9** is a schematic diagram of a computer system for implementing examples disclosed herein according to one example.
**FIG. 10** is a schematic flowchart of a computer-implemented method for implementing examples disclosed herein according to one example.
**FIG. 11** is a schematic flowchart of a computer-implemented method for implementing examples disclosed herein according to one example.
**FIG. 12** is a schematic diagram of a computer system for implementing examples disclosed herein according to one example.

### DETAILED DESCRIPTION

The detailed description set forth below provides information and examples of the disclosed technology with sufficient detail to enable those skilled in the art to practice the disclosure.

The present disclosure seeks to address the problem of unaddressed cargo movement within a vehicle's cargo space during transit, which can lead to cargo damage, compromised safety, and inefficiency in transport operations. It addresses this issue by employing approaches that not only detects cargo movement through sensor data but also proactively determines and executes preventive actions to stabilize the cargo and prevent further undesired movement. The computer system achieves this by first obtaining sensing data from sensors being strategically placed. These sensors monitor the position and movement of the cargo, preferably in real-time. When the system identifies that cargo has moved with respect to a pre-set threshold distance, indicating a potential risk, it then determines suitable preventive actions. These actions may include adjusting the driving route of the vehicle, modifying speed, or implementing other vehicle control measures. By doing so, the system actively works to mitigate any additional movement of the cargo that may result from the vehicle's operation or external factors such as road conditions.

The potential benefits of this system are multi-fold. The system may improve cargo safety by actively preventing cargo shifts that could lead to damage or loss. The system may enhance transport efficiency by reducing the need for manual cargo checks and potential transport delays, and may contribute to overall road safety by maintaining vehicle stability. Additionally, since the system preferably operates in real-time, the system can respond to dynamic changes in the vehicle's environment and operation, making it adaptable and responsive to various transit conditions. Compared to the prior art, the subject matter discussed in the present disclosure moves beyond mere detection of cargo movement by the integration of a responsive action component within the vehicle's control system. The system leverages sensor data not just for monitoring but for active intervention, offering a more comprehensive and automated solution to cargo management.

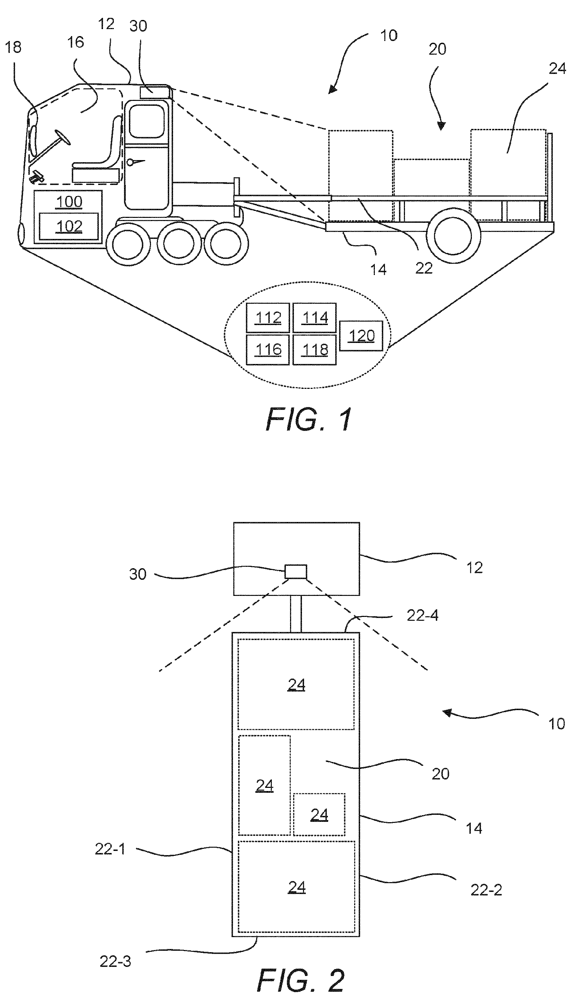

**FIG. 1** depicts an illustrative example of vehicle **10,** which is shown as a combination vehicle comprising a tractor unit **12** and a single trailing unit **14.** The vehicle **10** further includes a cabin **16** for the driver, which comprises the necessary controls and interfaces for operating the vehicle **10.** In alternative configurations, the vehicle **10** could be a rigid truck or a more complex assembly involving additional trailing units or a combination of a vehicle combination and a rigid truck. The flexibility in the type of vehicle allows for a variety of cargo transportation scenarios.

The vehicle **10,** in this example more specifically the trailing unit **14,** includes a cargo space **20.** The cargo space **20** is adapted to accommodate one or more pieces of cargo **24.** The cargo space **20** can be versatile and adapted to accommodate various types of cargo **24.** Examples of such cargo **24** could include construction materials, machinery, palletized goods, containers, or even packaged bulk items like gravel or agricultural produce. The nature of the cargo **24** may dictate the configuration of the cargo space **20,** which could include adjustable shelving, tie-down points, and partitions to secure and separate items of differing sizes, weights, and shapes. In the example shown, three pieces of cargo **24** are placed within the cargo space **20,** but this is merely illustrative, and the actual number, arrangement, and nature of the cargo can vary widely.

The trailing unit **14,** as illustrated, is an open trailer, which is a common configuration for transporting goods that do not require an enclosed space or that are too large or irregularly shaped for standard enclosed trailers. In examples where a rigid truck is employed, an open portion can serve a similar purpose. The open trailer or the open portion of the rigid truck can be secured with a tarpaulin, which may either partially or fully enclose a cargo space **20,** providing protection from environmental elements while still allowing for ease of access when loading and unloading cargo **24.**

The vehicle **10** also includes one or more systems that can interact with the cargo space **20.** The term "interact" shall in this sense be broadly interpreted, and can reflect any type of e.g. electrical or mechanical system that can affect how the cargo **24** is positioned in the cargo space **20.** By way of example, such systems may include a suspension system **110,** a braking system **112,** a stability system **114,** a steering system **116,** an anti-slip system **118,** or a hydraulic system **120.** For instance, the cabin **16** could be equipped with monitoring systems that receive data from sensors placed within the cargo space 20, allowing the driver to be aware of the status of the cargo 24 during transport.

The vehicle **10** comprises a sensor **30.** As will be described in further detail in the present disclosure, the arrangement location and orientation of the sensor **30** can vary depending on what is being monitored. Generally, however, the sensor **30** monitors the cargo space **20.** In certain embodiments, the sensor **30** monitors outer boundaries **22** of the cargo space **20,** such as from a location exterior to the cargo space **20.** While only one sensor **30** is shown in the present example other sensor configurations for a vehicle can be realized. For example, the vehicle **10** may include sensor arrangements having one or more sensors arranged at any suitable location with respect to the vehicle **10,** such as at the tractor unit **12** or the trailer unit **14,** a wheel portion, and the like.

The sensor **30** may include motion sensors, cameras, lidars, radars, ultrasonic sensors, infrared sensors, accelerometers, gyroscopes, magnetometers, or other types of sensor units that can detect when the cargo **24** moves with respect to a predefined threshold distance of the cargo space **20.** The sensing data depends on what type of sensor technology is employed. For instance, sensors including cameras will return image data as the sensing data. The sensor **30** may in this example sense the surroundings of the vehicle **10,** such as one or more meters from the outer boundaries **22** of the cargo space **20.** The range and responsiveness of the sensor **30** may depend on sensor type, sensor location, lens type, image sensor resolution, lighting conditions, ambient conditions (e.g., weather, humidity, fogginess), conditions of electronic components, potential obstructions in the field of view, latencies in computer systems, etc.

In some examples, the sensor **30** is a smart sensor configured to process sensed information and make a detection decision related to a detection of an object. The smart sensor may comprise a microcontroller, processor (e.g. PLC, CPU, DSP), FPGA, ASIC or any other suitable digital and/or analog circuitry capable of processing sensing data. The smart sensor may further comprise a memory implemented in any known memory technology, including but not limited to E(E)PROM, S(D)RAM or flash memory. The memory may be integrated with or internal to the microcontroller/processor/circuitry.

In other examples, the sensor **30** is a sensor not capable of processing information itself. Unlike smart sensors, which have built-in processing capabilities to interpret and analyze data, "dumb" sensors or "passive" sensors are devices that detect and measure physical properties or phenomena without any processing or interpretation of the sensing data being collected. These sensors typically generate raw analog or digital signals that need to be processed by external systems or devices to derive meaningful information or insights. Hybrids of smart sensors and dumb sensors can also be envisaged in some examples.

The sensor **30** may be operatively connected (e.g., wired or wirelessly) to suitable devices, systems and features of the vehicle **10**. The wireless interface and associated communication protocols may be based on any known communication technology known in the art, such as one or more of HTTP(S), TCP/IP, UDP, FTP, SMTP, DNS, DHCP, SSH, POP3, SCP, NFS, SFTP, ICMP, ARP, RTP, RTCP, IEEE 1202.11, IEEE 1202.15, ZigBee, WirelessHART, WiFi, Bluetooth^{®}, BLE, RFID, WLAN, MQTT IoT, CoAP, DDS, NFC, AMQP, LoRaWAN, Z-Wave, Sigfox, Thread, EnOcean, mesh communication, any form of proximity-based device-to-device radio communication, LTE Direct, W-CDMA/HSPA, GSM, UTRAN, LTE, IPv4, IPv6, 6LoWPAN, IrDA, or 5G NR. Wired interfaces may include CAN, Ethernet, FlexRay, or the like.

To address the problem of uncontrolled cargo movement, the vehicle **10** is equipped with a computer system **100** that includes processing circuitry **102.** The processing circuitry **102** is configured to obtain sensing data from the sensor **30** (or sensors, in plural, where there are many sensors). Upon detecting that at least a portion of the cargo **24** in the cargo space **20** is moved a threshold distance with respect to cargo space **24** during operation of the vehicle **10,** based on the sensing data, the processing circuitry **102** is configured to determine preventive actions. Carrying out the preventive action would result in further movement of the cargo **24** with respect to the threshold distance. The processing circuitry **102** is then further configured to control the vehicle **10** to at least partially carry out the preventive action that was determined.

The threshold distance of the cargo space **20** refers to a predefined limit or boundary related to the cargo space **20** of the vehicle **10.** Movement of cargo with respect to this predefined limit or boundary is considered potentially unsafe or undesirable. In some examples, the threshold distance of the cargo space **20** is set based on outer boundaries of the cargo space **20,** while in other examples the threshold distance of the cargo space **20** is set based on boundaries within the cargo space **20** (for example expected safe placements within the cargo space **20).** Depending on how the threshold distance is set, different sensor arrangements can be envisaged. To this end, threshold distances set within the cargo space **20** typically necessitate sensor arrangements in the interior of the cargo space **20,** especially in examples where the cargo space **20** is an enclosure. Correspondingly, threshold distances set relating to the outer boundaries of the cargo space **20** can involve interior and/or exterior sensor arrangements. The threshold distance acts as a trigger point for the sensor **30,** indicating when preventive measures should be considered to stabilize the cargo and prevent it from moving further or exiting the designated safe zone within the cargo space. The threshold distance may be set by the processing circuitry **102** via the sensor **30.**

That at least a portion of the cargo **24** is moved the threshold distance of the cargo space **20** describes a situation where one or more items of cargo **24** have shifted to such an extent that the pre-established threshold distance is violated. This implies that the cargo **24** is no longer within the safe containment area as initially intended, potentially leading to compromised security, stability, or integrity of the cargo **24,** and potentially increasing the risk of damage to the cargo **24** itself, the vehicle **10,** or posing a safety hazard to the operational environment. Cargo shifting with respect to the threshold distance can occur due to a plurality of interconnected factors. For instance, cargo **24** that is not secured tightly enough can easily jostle or shift as the vehicle **10** accelerates, decelerates, or maneuvers over uneven road surfaces. This movement is further exacerbated during aggressive driving actions such as sharp turns or heavy braking, which exert additional lateral or longitudinal forces on the cargo **24.** Moreover, environmental factors, like wind resistance acting on a tear in a tarpaulin, can also lead to cargo displacement. Packaging that fails to adequately contain the cargo **24** adds to the risk, as items may move around if not properly restrained. Driving on an incline or through hilly terrain can cause the cargo to gravitate towards the lower end of the vehicle **10,** and any external impacts from collisions or road debris can result in sudden and forceful cargo movement. In more severe cases, such as a vehicle rollover, the cargo **24** is almost certain to shift significantly. Each of these scenarios highlights the challenges in maintaining cargo stability and the need for a robust system to monitor and respond to potential cargo movement.

The vehicle operation may encompass all aspects of a functioning and maneuvering of the vehicle **10** while in transit. This includes driving actions such as starting, stopping, accelerating, decelerating, steering, and navigating along a route, as well as operational aspects like the use of braking systems, suspension adjustments, and other vehicle controls that can affect movement of the cargo **24.** The vehicle operation may be influenced by the driver's inputs, environmental conditions, vehicle condition, road characteristics, and in the context of modern vehicles, automated systems designed to assist or take over certain driving functions.

The preventive action to be carried out by the vehicle **10** refers to specific measures or maneuvers that the vehicle **10** can perform to counteract the detected movement of cargo **24** based on the sensing data and prevent further displacement. The preventive action comprises a driving route which the vehicle **10** is taking or will take during operation. Preventing further displacement may be to maintain the cargo **24** in place, and preferably also to cause it to be repositioned back within acceptable limits defined by the threshold distance. The processing circuitry **102** may be configured to determine the preventive actions based on the nature and extent of the cargo movement.

"At least partially carrying out the preventive action" means that the processing circuitry **102** begins to implement the determined preventive measures to address the cargo movement issue. The term "at least partially" acknowledges that the full scope of the preventive action may involve a series of steps or adjustments, and the process might be initiated and executed progressively and/or part of the process may involve manual input from the driver. For example, if the preventive action includes a change in route, the vehicle **10** may begin to alter its course immediately upon command but may not complete the route change until a safe opportunity arises. This term captures the initiation and ongoing implementation of the preventive measures, even if they are not fully completed instantaneously.

In some examples, the preventive action may be determined by identifying a discrepancy between reference sensing data and the sensing data. In these examples, the processing circuitry **102** relies on a comparison between two sets of data: reference sensing data, which represents the known and safe placement of the cargo **24,** for example representing a safe placement before the vehicle begins operation, and live sensing data collected during the operation. The reference sensing data serves as a standard or baseline for cargo placement within the vehicle's **10** cargo space **20.** This baseline can be established through various means such as visual imaging, weight distribution sensors, or spatial mapping technologies, for example before the vehicle **10** embarks on its route, optionally via the sensor **30.** The sensor **30** then continuously or periodically captures sensing data during the vehicle's operation to monitor the current state of the cargo **24.** By comparing the (preferably real-time) sensing data with the reference data, the processing circuitry **102** can discern any significant discrepancies that may indicate movement of the cargo **24.** This comparison may allow identifying genuine shifts in cargo position, rather than false positives that might otherwise trigger unnecessary preventive actions. Such false positives can occur due to the normal vibrations and movements inherent in vehicle operation, which do not necessarily pose a risk to cargo stability. This may ensures that preventive actions are only taken when there is a verified risk of cargo instability, thereby improving the vehicle's **10** operation and ensuring the safety and integrity of the cargo throughout the transit period. These examples may be particularly useful for transporting oversized or irregularly shaped cargo **24** that do not conform to standard cargo dimensions, providing a tailored and reliable solution for a wide range of transportation needs.

In some examples, the preventive action may be partially carried out by causing autonomous driving of the vehicle **10** to follow the determined driving route. The preventive action involving autonomous driving requires the vehicle **10** to have advanced driver-assistance systems (ADAS) and potentially higher levels of automation. This would necessitate a combination of sensors such as cameras, radar, and LiDAR, alongside GPS and mapping technology to accurately determine the vehicle's **10** location and the environment around it. The processing circuitry **102** is configured to interpret the data from these sensors to navigate the determined driving route without human intervention, including steering, speed, and braking, to maintain the stability of the cargo **24.** This may offer benefits relating to increased safety, as the vehicle **10** can make rapid, precise adjustments that might be too challenging for a human driver, particularly in complex or hazardous driving conditions. It can also allow for more consistent adherence to the determined driving route, reducing the potential for errors that could lead to cargo movement.

In some examples, the preventive action may be partially carried out by transmitting the driving route to a driver of the vehicle **10.** This may be done via a user interface **18,** for example the vehicle dashboard or infotainment system. Transmitting the driving route to the driver as a preventive action may leverages the user interface **18** that could be integrated into the vehicle **10.** The user interface **18** may display the determined driving route, optionally along with any necessary alerts or recommendations for route changes. The driver would then manually follow these directions to stabilize the cargo **24.** To accomplish this, the vehicle **10** involves software capable of converting the sensor and data inputs into clear, actionable driving instructions for the driver. This could include visual maps, auditory commands, or haptic feedback. Benefits of this approach may be that it keeps the driver engaged and informed about the best course of action, combining the data-driven recommendations with the driver's situational awareness and experience. It may allow for a flexible response to unpredictable roads, with the driver having the final say on vehicle control.

A combination of manual and autonomous partial conduct of the preventive action may also be envisaged.

In some examples, the processing circuitry **102** may be further configured to, in response to a cargo **24** moving with respect to the threshold distance, cause emission of a noticeable indicator. This may be done via control of a device, such as a display device in the form of visual cue, a speaker in the form of an audible alert, or a force feedback device in the form of a tactile indicator. The indicator may serve as information that an unsafe cargo condition is detected. The indicator may be emitted inside the cabin **16,** for example via the user interface **18,** to warn the driver. The indicator may additionally or alternatively be emitted into an external environment, to warn other drivers, pedestrians, or the like. This may be done by activating warning lights, blinkers or other vehicle lights, causing activation of a car horn, or the like.

The sensing data may be able to provide information pertaining to translational movement and/or rotational movement of the cargo **24.** Detecting rotational movement may be relevant for stacked or irregularly shaped cargo **24.** Rotational movements involve the cargo **24** tilting or rotating around an axis, which could pose a risk in terms of stability and safety. To this end, the threshold distance may pertain to rotational boundaries as well as translational boundaries. In examples where cargo **24** is stacked, the upper layers might rotate due to dynamic forces such as sharp turns or sudden stops, thus increasing the risk of toppling. The detection of rotational movement may necessitate the sensor **30** being capable of providing information pertaining to angular displacement and rotational velocity. The preventive action may differ depending on whether cargo movement violates a threshold distance pertaining to a translational boundary or a rotational boundary. By incorporating the capability to detect both translational and rotational movements and understanding the distinct risks associated with each, a comprehensive approach to maintaining cargo safety can be ensured.

While not explicitly shown in **FIG. 1****,** the vehicle **10** may involve one or more auxiliary systems and devices designed to gather data to be used for the determination of the preventive action. By way of example, such systems may include one or more of a GPS system, IMU(s), weather sensors onboard or linked to the vehicle **10,** telematics system, camera systems and other road condition monitoring equipment, weight sensors, stability control system, fleet management system, lidar, radar, communication system, such as vehicle-to-everything (V2X), and onboard diagnostic system.

**FIG. 2** schematically illustrates a vehicle **10** according to one exemplary top view. The vehicle **10** may be the same vehicle **10** as depicted and explained with reference to **FIG. 1****,** but loaded with different cargo. From this view, it can be seen that this exemplary cargo space **20** includes four boundaries **22;** a first lateral boundary **22-1,** a second lateral boundary **22-2** opposite from the first lateral boundary **22-1,** a rear boundary **22-3,** and a front boundary **22-4.** Other cargo spaces may include other boundary configurations, depending on for example shape and/or size. In this example the sensor **30** is arranged to monitor the front boundary **22-4** for any cargo **24** that is moved beyond a threshold distance with respect to the cargo space **20.** As discussed above, other threshold distances, for example threshold distances being set within the cargo space **20,** may involve sensors being arranged within the cargo space **20** for effective monitoring.

Generally, the threshold distance can correspond exactly to the physical boundary **22-4,** i.e. 0 cm from the boundary **22-4**, or be ± *n* cm from the physical boundary **22-4,** where *n* is an arbitrary value such as 10, 40, 100, or the like. As discussed herein, this may vary depending on a variety of factors. The same as discussed here for this particular boundary **22-4** can be applicable for other boundaries **22** as well. Different or the same threshold distances may also be set for other boundaries **22.** Moreover, the threshold distance can correspond to boundaries within the cargo space **20,** for example relating to expected safe placements or delineations relating to compartments, shelves, fastening systems, or the like.

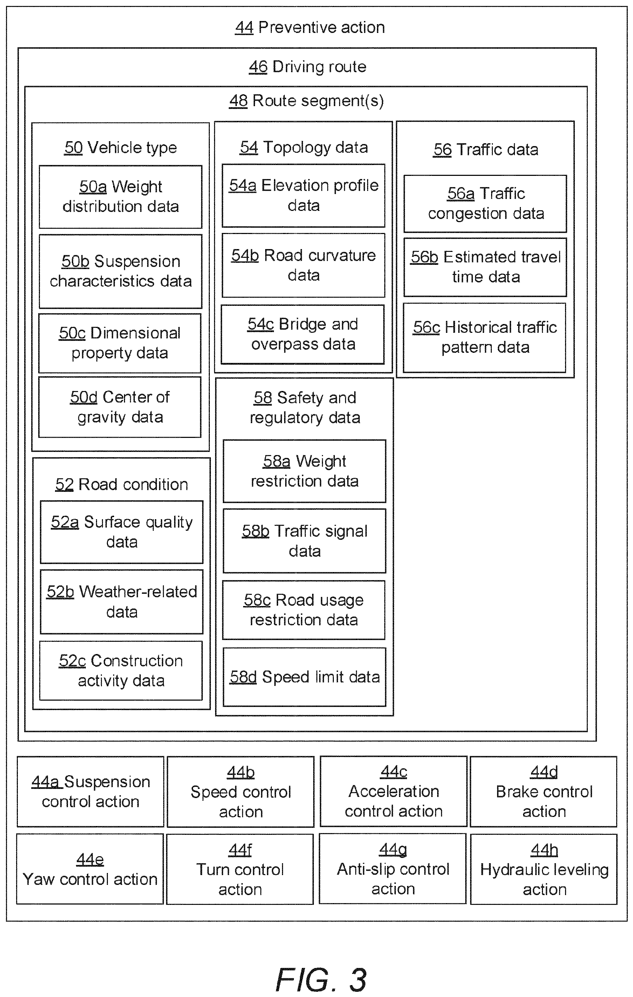

**FIG. 3** is a schematic block diagram depicting various exemplary preventive actions **44.** The preventive action **44** comprises a driving route **46.** Therefore, determining what preventive action **44** is to be carried out based on the cargo movement is directly related to a particular driving route **46** where the vehicle **10** is or will be operating.

The processing circuitry **102** may be configured to determine the driving route **46** by at least selecting or omitting one or more route segments **48** from the driving route **46.** A route segment **48** may have any length, from shorter routes of just a few meters to longer routes of several tens or hundreds of kilometers. The purpose of this configuration of the processing circuitry **102** is to dynamically adjust the driving route **46** by incorporating or excluding specific route segments **48.** This selective modification of the route is intended to stabilize the cargo **24** within the cargo space **20** by mitigating conditions that may cause cargo movement, ultimately preventing further displacement of the cargo with respect to the established threshold distance.

The selection or omission of a route segment **48** by the processing circuitry **102** can be based on a multitude of data inputs, some of which are illustrated in **FIG. 3****.** This data-driven approach ensures that the driving route **46** is improved, preferably in real-time, for the safest and most efficient transport of cargo **24,** taking into account the unique characteristics of the vehicle **10** and the cargo **24** it carries.

The selection or omission may be based on a vehicle type **50.** The type **50** of vehicle being operated can influence the handling and stability characteristics of the transport and thus impact the route selection. The vehicle type **50** may indicate weight distribution data **50a,** which is about how the weight of the cargo **24** is distributed within the vehicle **10,** which affects the balance and handling of the vehicle **10,** particularly during maneuvers. The vehicle type **50** may indicate suspension characteristics data **50b,** which pertains to the vehicle's **10** suspension system **110.** This may be relevant for determining route segments **48** that the vehicle **10** can traverse without causing undue movement of the cargo **24.** The vehicle type **50** may indicate dimensional property data **50c.** The dimensions of the vehicle **10** may limit passage through certain route segments **48** with for example height, width, or length restrictions. The vehicle type **50** may indicate center of gravity data **50d.** The location of the vehicle's **10** center of gravity can affect vehicle stability and the risk of cargo movement, especially in turns or on slopes.

The selection or omission may be based on a road condition **52.** The purpose of incorporating road condition **52** into the determination of the driving route **46** is to ensure that the chosen path reduces the risk of cargo movement due to external road factors. By evaluating the current state of the roads, the processing circuitry **102** can make informed decisions about which route segments **48** to select or omit, which may enhance the safety and security of the cargo **24** during transit. The road condition **52** may indicate surface quality data **52a,** which pertains to the condition of the road surface, such as the presence of potholes, uneven pavement, or debris, which can cause vibrations or jolts that may displace cargo **24.** The road condition **52** may indicate weather-related data **52b,** which involves information regarding weather conditions like rain, snow, ice, or wind that can impact road traction and vehicle stability, and therefore influence route selection to avoid weather-compromised roads. The road condition **52** may indicate construction activity data **52c.** Details about ongoing construction work along the route segment **48,** including lane closures or detours, which could lead to unexpected stops or rough riding conditions that might shift the cargo **24.**

The selection or omission may be based on topology data **54.** The use of topology data **54** in the decision-making process for the driving route **46** is aimed at enhancing cargo safety by considering the physical layout and geographic features of potential route segments **48.** The processing circuitry **102** utilizes this data to avoid route segments **48** that could increase the risk of cargo movement due to topological challenges. The topology data **54** may indicate elevation profile data **54a.** This data provides information on the inclines and declines along route segments **48,** enabling omission of paths that avoid steep gradients which could cause cargo **24** to shift, especially if not properly secured. The topology data **54** may indicate road curvature data **54b.** Information on the curvature of the roads may be relevant to consider for anticipating the lateral forces that might act on the cargo **24** during turns. Route segments **48** with gentler curves can thus be selected to maintain cargo stability. The topology data **54** may indicate bridge and overpass data **54c.** Details about bridges and overpasses, including possible ramps, their structural characteristics and any weight or height restrictions, could influence route feasibility based on the vehicle's **10** and cargo's **24** dimensions and weight.

The selection or omission may be based on traffic data **56.** Incorporating traffic data **56** into the route planning process allows the processing circuitry **102** to select or omit route segments **48** that could negatively impact the safe transport of cargo **24** due to traffic conditions. This data-driven approach may help in avoiding potential delays and reduces the likelihood of cargo movement caused by stop-and-go traffic or other congestion-related issues. The traffic data **56** may indicate traffic congestion data **56a,** reflecting real-time traffic conditions, such as congestion or accidents, which can lead to unexpected stops or slow-moving traffic that may cause cargo **24** to shift, especially for sensitive or improperly secured loads. The traffic data **56** may indicate estimated travel time data **56b.** Information on the expected time to traverse various route segments **48** can aid in planning the most efficient route while also considering the urgency of the cargo delivery and the potential for traffic to affect the stability of the cargo **24.** The traffic data **56** may indicate historical traffic pattern data **56c.** Details about usual traffic flows based on time of day, day of the week, or specific events, can predict and circumvent known busy periods or bottlenecks that might otherwise increase the risk of cargo movement due to prolonged travel times or frequent adjustments in vehicle speed.

The selection or omission may be based on safety and regulatory data **58.** The integration of safety and regulatory data **58** into the route planning may ensure that the driving route **46** complies with legal requirements and safety guidelines while also catering to the stability needs of the cargo **24.** The processing circuitry **102** uses this information to navigate regulatory constraints and enhance the protection of the cargo **24** during transit. The safety and regulatory data **58** may indicate weight restriction data **58a.** This data informs about a limit permissible weight for vehicles on certain roads, bridges, or areas, ensuring that the chosen route can legally accommodate the vehicle's **10** total weight, including cargo **24,** thereby avoiding potential wrongly selected roads that can necessitate a rerouting and thus potential further cargo movement. The safety and regulatory data **58** may indicate traffic signal data **58b.** Information concerning the location and operation of traffic signals can influence the flow of traffic and the vehicle's movement patterns, thus playing a role in reducing frequent stops and starts that may destabilize the cargo **24.** The safety and regulatory data **58** may indicate road usage restriction data **58c.** Details about any restrictions on road use, such as those applicable to commercial vehicles or vehicles carrying hazardous materials, might dictate which roads are suitable for the vehicle to travel on with its specific type of cargo **24,** thereby avoiding potential wrongly selected roads that can necessitate a rerouting and thus potential further cargo movement. The safety and regulatory data **58** may indicate speed limit data **58d.** The legal speed limits for different segments of the route, can affect the time of travel and the dynamic forces acting on the cargo **24.** Adhering to speed limits is not only a legal necessity but also a factor in preventing cargo movement due to acceleration or deceleration.

Further shown in **FIG. 3** are other exemplary control actions serving as preventive actions **44.** These may be carried out one by one, simultaneously, as a consequence of selecting or omitting any of the route segments **48** as discussed above, or the like. These control actions are carried out for counteracting further movement of the cargo **24,** and preferably also for repositioning the cargo **24** within the acceptable limits defined by the threshold distance. The preventive action **44** may encompass various vehicle control strategies aimed at stabilizing the cargo **24** once the processing circuitry **102** detects that it has moved with respect to the threshold distance with respect to the cargo space **24.**

The preventive action **44** may be a suspension control action **44a.** If the sensor **30** indicates that the cargo **24** is tilting or shifting due to e.g. uneven road surfaces, the suspension control action **44a** can be initiated by adjusting the suspension system **110.** For example, the suspension system **110** could stiffen the suspension on one side of the vehicle **10** to counteract a detected lean, or it could raise the suspension on one end to redistribute cargo weight more evenly.

The preventive action **44** may be a speed control action **44b.** Upon detecting that cargo movement is correlated with the vehicle's **10** speed, the speed control action **44b** can slow down or increase the speed of the vehicle **10** to reduce the forces acting on the cargo **24.** For instance, if the cargo **24** shifts forward during rapid deceleration, the system could maintain a steadier, slower speed to limit forward cargo movement.

The preventive action **44** may be an acceleration control action **44c.** If rapid acceleration is causing cargo **24** to shift backward, the acceleration control action **44c** can modulate the throttle to increase the vehicle's **10** speed more gradually. Conversely, if deceleration is causing issues, a smoother, controlled braking can be ensured to prevent cargo **24** from lurching forward.

The preventive action **44** may be a brake control action **44d.** In a scenario where hard braking is leading to cargo **24** shifting towards the front of the cargo space **20,** the brake control action **44d** could engage the braking system **112** to apply brakes in a more modulated fashion, reducing the risk of sudden cargo movement.

The preventive action **44** may be a yaw control action **44e.** If cargo **24** is moving laterally during e.g. turning maneuvers, the yaw control action **44e** could activate the stability system **114** to adjust the vehicle's **10** yaw movement, helping to keep the cargo **24** stable through careful management of the vehicle's **10** dynamic balance.

The preventive action **44** may be a turn control action **44f.** When turning is causing cargo **24** to slide or tip, the turn control action **44f** could involve the steering system **116** to adjust the angle or speed of the turn. This might mean taking wider turns or reducing speed before and during a corner to lower lateral forces on the cargo **24.**

The preventive action **44** may be an anti-slip control action **44g.** If the cargo **24** is moving due to wheel slip, perhaps on icy roads, the anti-slip control action **44g** could activate the traction control system **118.** This system could modulate power to the wheels to prevent slippage and the resultant jerking movements that can shift cargo **24.**

The preventive action **44** may be a hydraulic leveling action **44h.** For cargo **24** that is moving because of the vehicle's **10** angle, such as when driving on a slope, the hydraulic leveling action **44h** could adjust the hydraulic system **120** to level out the cargo space **20,** thereby preventing gravity from causing the cargo **24** to slide or roll.

Each of the above-mentioned preventive actions **44** is a response tailored to the type of cargo movement detected and the associated risks assessed by the processing circuitry **102,** working in tandem to maintain the cargo **24** securely within the cargo space **20** and prevent it from moving further with respect to safe parameters.

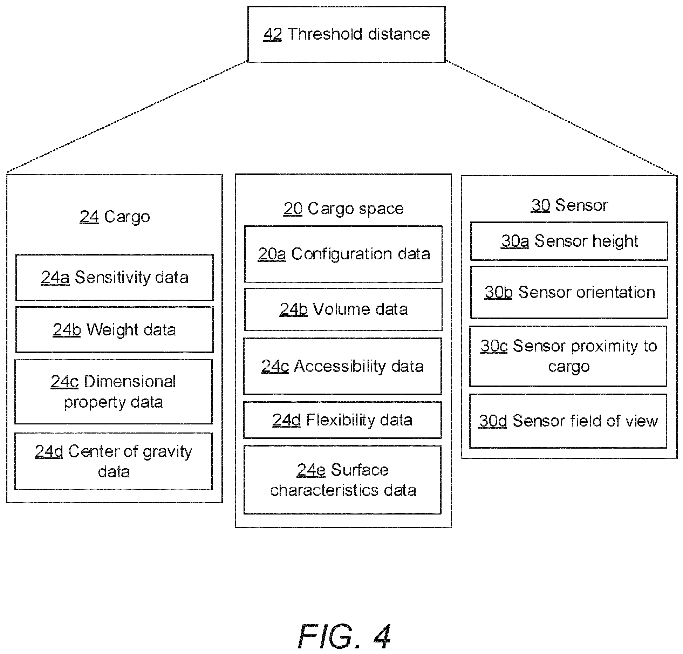

**FIG. 4** shows exemplary data upon which the threshold distance **42** can be based. Generally, the threshold distance **42** can be set based on a type of cargo **24,** a type of cargo space **20,** and a mounting position of the sensor **30.**

The type of cargo **24** may indicate one or more of sensitivity data **24a,** weight data **24b,** dimensional property data **24c** and center of gravity data **24d.** Safer limits can thus be set based on how sensitive the items are (e.g. hazardous goods are generally more sensitive which can warrant a lower threshold distance **42).** Moreover, heavier or more massive cargo items may require a larger threshold distance **42** to account for the increased inertia and the forces required to move such items, ensuring that the preventive actions **44** are not triggered by normal vehicle motion that would not significantly affect heavier cargo. In addition, volume, height, length, and width of the cargo **24** can affect how cargo **24** interacts with the available cargo space **20** and how it might move or shift. Furthermore, a center of gravity of the cargo **24** can be a factor to consider; a higher center of gravity could mean the cargo is more prone to tipping or toppling, requiring a smaller threshold distance **42** to trigger preventive actions **44** more quickly to ensure stability. The type of cargo **24** can relate to one or more individual pieces of cargo **24.**

The type of cargo space **20** may indicate one or more of configuration data **20a,** volume data **20b,** accessibility data **20c,** flexibility data **20d,** and surface characteristics data **20e.** Different configurations, such as shelving, partitioning, or open spaces, influence how cargo **24** is stored and how it may shift within the cargo space **20.** Moreover, the overall dimensions and volume of the cargo space **20** determine how much room the cargo has to move. A larger cargo space **20** might allow for a larger threshold distance **42** before preventive actions **44** are triggered. In addition, how the cargo space **20** is accessed, for example, through rear doors, side doors, or a liftgate, can influence the direction and likelihood of cargo **24** movement. Furthermore, the presence of adjustable components within the cargo space **20,** such as movable dividers or tie-down points, can impact the stability of the cargo **24.** In addition, the materials lining the cargo space **20,** such as non-slip flooring or padded walls, can affect the movement of cargo **24** and thus the appropriate threshold distance **42.**

The mounting position of the sensor **30** may indicate one or more of sensor height **30a,** sensor orientation **30b,** sensor proximity **30c** to the cargo **24** or cargo space **20,** and sensor field of view **30d.** Sensors **30** mounted at different outside of the cargo space **20** may detect movement differently; a sensor closer certain boundaries **22** might have a larger threshold distance **42** for detecting lateral movement of cargo **24** than one mounted further away, and similar can be envisaged by height of the sensor **30.** In addition, the angle at which the sensor is mounted can affect its field of view and sensitivity to movement in specific directions (forward, backward, lateral, etc.). Furthermore, the field of view can determine how much of the cargo space **20** it can monitor at once, affecting the threshold distance **42** based on the coverage area.

Other examples not shown in **FIG. 3** may be envisaged upon which the threshold distance **42** can be based, such as operating conditions of the vehicle **10,** ambient conditions, safety regulations, or the like.

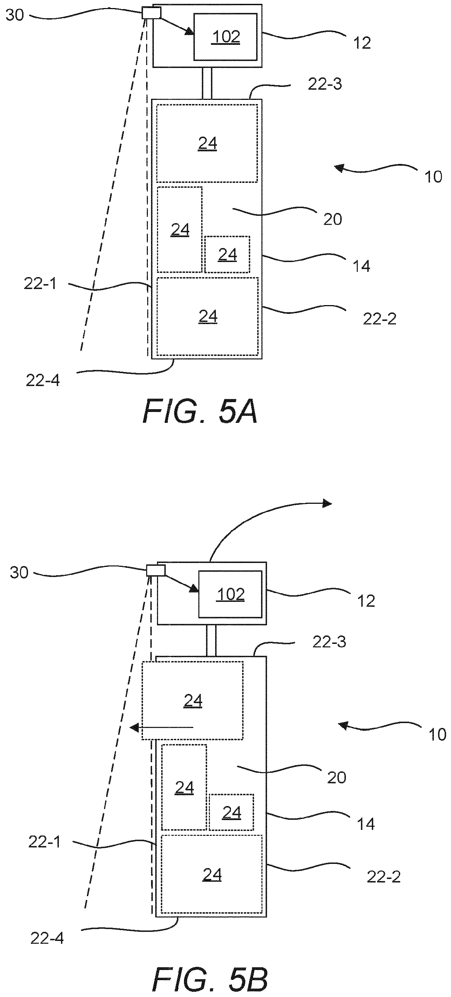

**FIGs. 5A-C** show an exemplary operational scenario of a vehicle **10** based on some control approaches discussed herein. In this example the vehicle **10** comprises a sensor **30.** The sensor **30** monitors a first lateral outer boundary **22-1** of the cargo space **20,** and the threshold distance pertains to the first lateral outer boundary **22-1.** The cargo space **20** accommodates four pieces of cargo **24.**

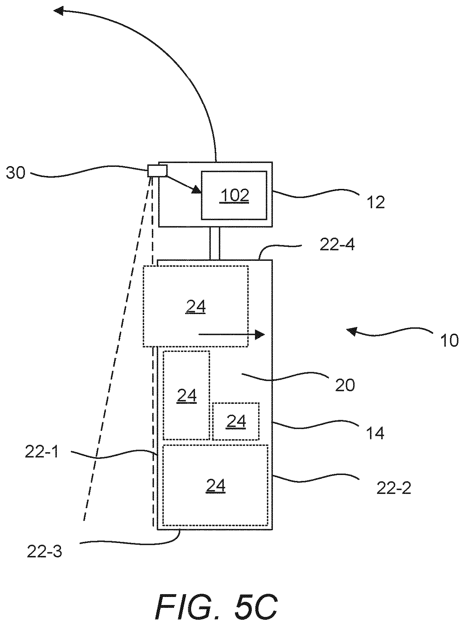

**FIG. 5A** corresponds to a normal (and safe) vehicle operation. No cargo **24** is moved outside of the monitored first lateral outer boundary **22-1.** In **FIG. 5B****,** the vehicle **10** has taken a sharp right turn, as indicated by the arrow, causing a piece of cargo **24** to shift outside the threshold distance at the first lateral outer boundary **22-1.** This movement is detected by the sensor **30.** As a consequence, in **FIG. 5C****,** a certain preventive action has been determined, causing at least partial control of the vehicle **10** such that it compensates by a left turn. This may for example be done by selecting a certain route segment that requires such a left turn for the vehicle **10** to maintain thereon.

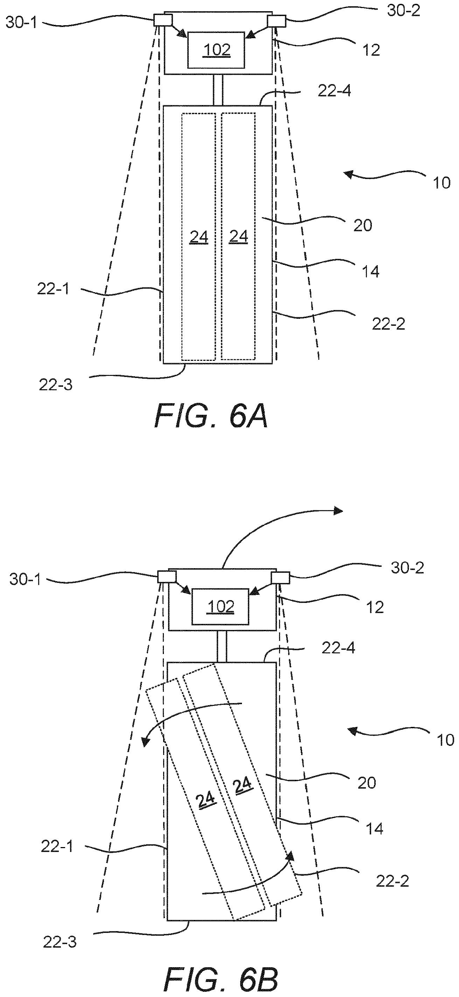

**FIGs. 6A-C** show another exemplary operational scenario of a vehicle **10** based on some control approaches discussed herein. In this example, the sensor **30** comprises a first sensor **30-1** and a second sensor **30-2,** each monitoring a respective opposite lateral outer boundary **22-1, 22-2,** of the cargo space **20.** The threshold distance may be set the same or differently for the respective boundaries **22-1, 22-2.** The cargo space **20** accommodates two pieces of cargo **24.**

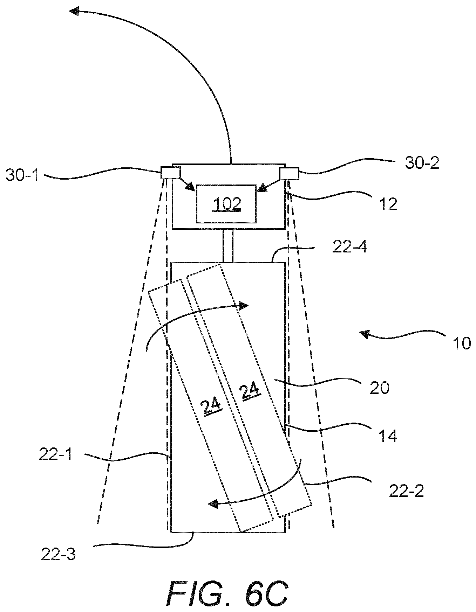

**FIG. 6A** corresponds to a normal (and safe) vehicle operation. No cargo **24** is moved outside of the monitored boundaries **22-1, 22-2.** In **FIG. 6B****,** the vehicle **10** has taken a sharp right turn, as indicated by the arrow, causing both pieces of cargo **24** to shift outside the threshold distance, one at the first threshold distance and another at the second threshold distance. This movement is detected by the respective sensors **30-1, 30-2.** As a consequence, in **FIG. 6C****,** a certain preventive action has been determined, causing at least partial control of the vehicle **10** such that it compensates by a left turn. This may for example be done by selecting a certain route segment that requires such a left turn for the vehicle **10** to maintain thereon.

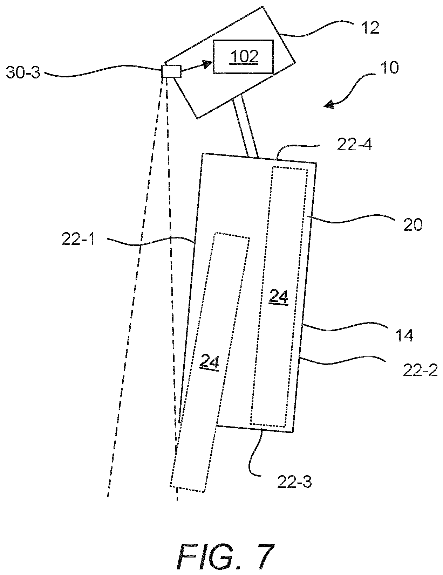

**FIG. 7** is another operational scenario according to an example. Herein the sensor **30** comprises a rear sensor **30-3** monitoring a rear outer boundary **22-3** of the cargo space **20.** To this end, a preventive action can also be taken in response to the rear sensor **30-3** indicating an unsafe movement of the cargo **24** as a result of the threshold distance pertaining to the rear outer boundary **22-3** being violated.

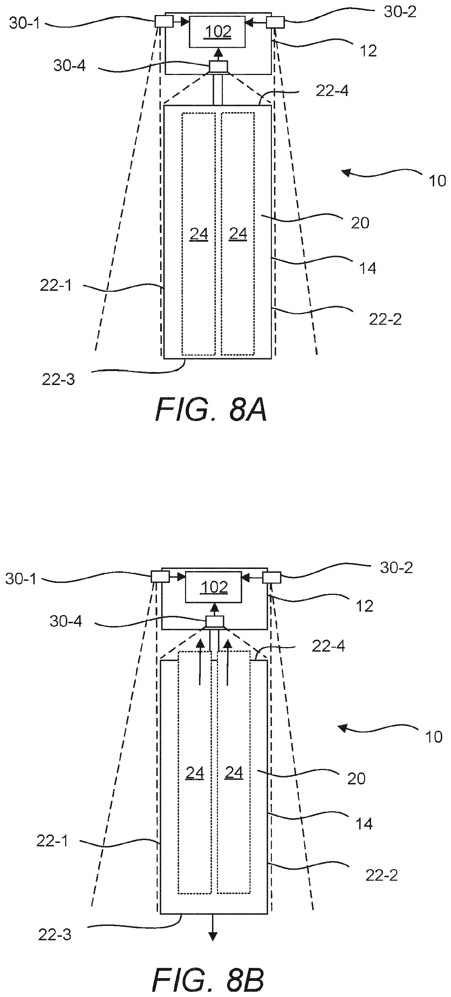

**FIGs. 8A-C** show another exemplary operational scenario of a vehicle **10** based on some control approaches discussed herein. In this example, the sensor **30** comprises a first sensor **30-1** and a second sensor **30-2,** each monitoring a respective opposite lateral outer boundary **22-1, 22-2,** of the cargo space **20,** and a front sensor **30-4** monitoring a front outer boundary **22-4** of the cargo space **20.** The threshold distance may be set the same or differently for the respective boundaries **22-1, 22-2, 22-4.** The cargo space **20** accommodates two pieces of cargo **24.**

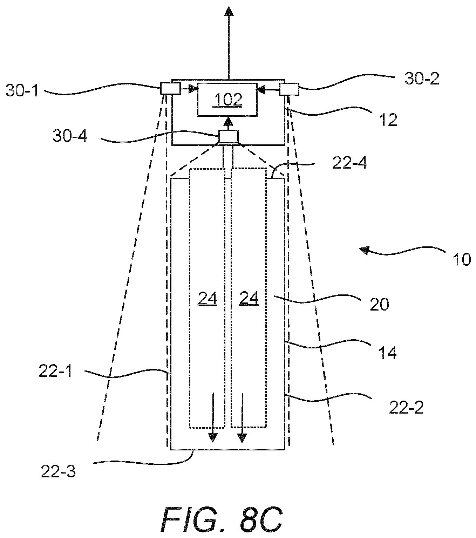

**FIG. 8A** corresponds to a normal (and safe) vehicle operation. No cargo **24** is moved outside of the monitored boundaries **22-1, 22-2, 22-4.** In **FIG. 8B****,** the vehicle **10** has actuated the brakes, as indicated by the arrow, causing both pieces of cargo **24** to shift outside the threshold distance at the front outer boundary **22-4.** This movement is detected by the front sensor **30-4.** As a consequence, in **FIG. 8C****,** a certain preventive action has been determined, causing at least partial control of the vehicle **10** such that it compensates by an accelerating action. This may for example be done by selecting a certain route segment that offers a higher speed limit.

While the examples of **FIGs. 5-8** primarily discuss a sensor **30** arranged to monitor external boundaries of the cargo space **20,** this shall not be construed as limiting to the scope of the present disclosure. As discussed above, internal boundaries of the cargo space **20** can also be considered. Moreover, the examples discussed above contextualize cargo movements in the X and Y planes from the point of view of the illustrations (i.e., top view). However, this is just for reasons of brevity, and it shall be appreciated that movements in the Z plane may additionally, or alternatively, be considered. This means that the system is equipped to detect and respond to cargo movements in lateral (X and Y planes) and/or vertical (Z-plane) directions. For example, suppose the vehicle **10** is turning sharply or changing lanes abruptly. The cargo might slide laterally across the floor of the cargo space, moving away from its intended position. If this lateral movement exceeds the predefined threshold distance in the X or Y plane, the system detects this as a risk. In another example the vehicle **10** may be traveling over hilly or uneven terrain. This could cause the cargo **24** to tilt or shift vertically, potentially leading to destabilization if the cargo **24** is not adequately secured. As such, the threshold distance may also pertain to the Z-plane. By considering movements in the X, Y, and/or Z planes, comprehensive monitoring of the cargo space **20** can be ensured. This approach allows for detecting shift, or tilt, that could signify an unsafe condition, regardless of the direction of movement.

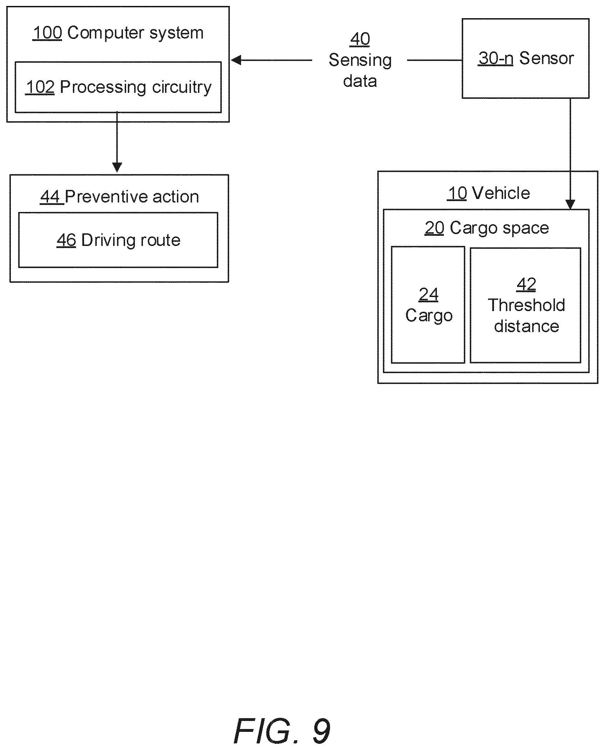

**FIG. 9** is a schematic diagram of a computer system **100** for implementing examples disclosed herein. The computer system **100** comprises processing circuitry **102.** The processing circuitry **102** is configured to obtain sensing data **40** from a sensor **30-n** monitoring a cargo space **20** of a vehicle **10.** The processing circuitry **102** is configured to determine, based on the sensing data **40,** that at least a portion of a cargo **24** in the cargo space **20** is moved a threshold distance **42** of the cargo space **24** during operation of the vehicle **10.** The processing circuitry **102** is configured to determine at least one preventive action **44** to be carried out by the vehicle **10** to prevent further movement of the cargo **24** with respect to the threshold distance **42,** the at least one preventive action **44** comprising a driving route **46.** The processing circuitry **102** is configured to control the vehicle **10** to at least partially carry out the at least one preventive action 44.

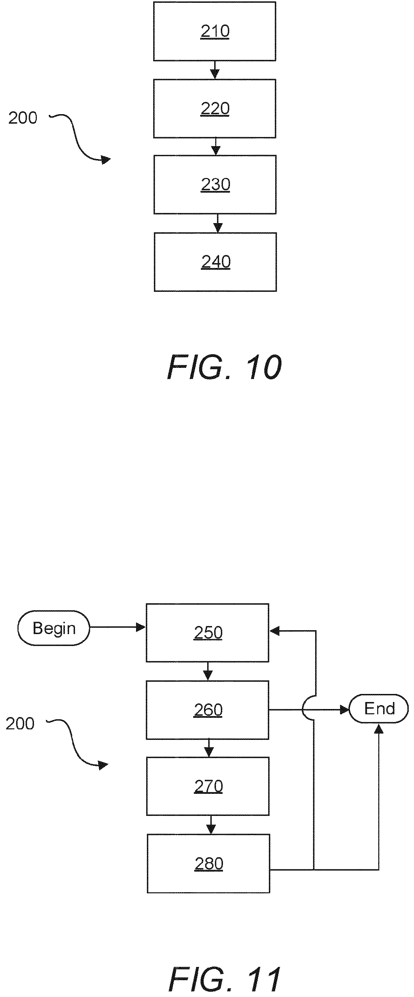

**FIG. 10** is a flowchart of a computer-implemented method **200.** The method **200** begins at step **210,** by processing circuitry of a computer system, of obtaining sensing data from a sensor monitoring a cargo space of a vehicle. At step **220** the method **200** determines, by the processing circuitry, based on the sensing data, that at least a portion of a cargo in the cargo space is moved a threshold distance of the cargo space during operation of the vehicle. At **230,** the method determines, by the processing circuitry, at least one preventive action to be carried out by the vehicle to prevent further movement of the cargo with respect to the threshold distance, the at least one preventive action comprising a driving route. At **240,** the method **200** controls, by the processing circuitry, the vehicle to at least partially carry out the at least one preventive action. In response to a successful carrying out of the preventive action, the method **200** terminates.

**FIG. 11** is a flowchart of a computer-implemented method **200.** The steps shown can be carried out following the initial steps **210, 220, 230, 240** outlined in the flowchart of method **200** as discussed with reference to **FIG. 10. FIG. 11** highlights additional and optional steps **250, 260, 270, 280** of the method **200** to provide continuous monitoring and adaptive response capabilities. These additional steps **250, 260, 270, 280** can form an iterative feedback loop that continuously assesses the efficacy of the implemented preventive actions and adjusts them as necessary in real-time. The additional steps **250 to 280** can also be carried out by the processing circuitry.

**At 250,** the method **200** obtains updated sensing data from the sensor after implementing the initial preventive action. This can ensure that the system has real-time data on the position and movement of the cargo following the adjustments made to the vehicle's driving route or other preventive action at **240.** At **260,** the method re-evaluates the updated sensing data to determine if cargo movement has been successfully stabilized within the threshold distance of the boundaries of the cargo space. If the cargo is now stable and no longer poses a risk of moving beyond the safe boundaries, the process can be terminated, or the monitoring can continue at a regular interval to ensure ongoing safety. However, upon being determined that the initial preventive action was not sufficient to correct the risk, i.e., the cargo is still moving or has not yet stopped moving with respect to the threshold distance, the method can proceed to step **270** which involves determining an additional preventive action. This could involve further modifying the driving route, adjusting the vehicle's speed, changing the suspension settings, or implementing other preventive actions to enhance cargo stability as mentioned herein. At **280,** the method **200** controls the vehicle to carry out this additional preventive action. After implementing the additional preventive action, the method **200** can terminate, or loop back to step **250** to continue to obtain and analyze updated sensing data to assess the effectiveness of the newly implemented measures.

The method **200** described above, comprising steps **250** to **280,** can continue iteratively until the cargo is confirmed to be securely maintained within the defined threshold distance, ensuring that all potential risks are mitigated and the cargo's safety is continuously monitored and maintained throughout the vehicle's operation. This dynamic and responsive approach can allow the system to adapt to varying conditions and cargo behaviors, providing a robust solution to cargo safety in transit.

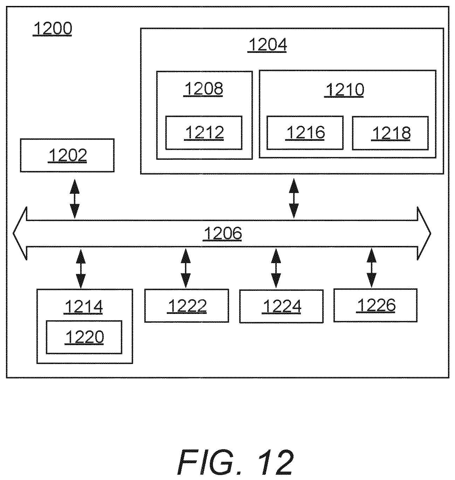

**FIG. 12** is a schematic diagram of a computer system **1200** for implementing examples disclosed herein. The computer system **1200** is adapted to execute instructions from a computer-readable medium to perform these and/or any of the functions or processing described herein. The computer system **1200** may be connected (e.g., networked) to other machines in a LAN, an intranet, an extranet, or the Internet. While only a single device is illustrated, the computer system **1200** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1200** may comprise at least one computing device or electronic device capable of including firmware, hardware, and/or executing software instructions to implement the functionality described herein. The computer system **1200** may include processing circuitry **1202** (e.g., processing circuitry including one or more processor devices or control units), a memory **1204,** and a system bus **1206.** The computer system **1200** may include at least one computing device having the processing circuitry **1202.** The system bus **1206** provides an interface for system components including, but not limited to, the memory **1204** and the processing circuitry **1202.** The processing circuitry **1202** may include any number of hardware components for conducting data or signal processing or for executing computer code stored in memory **1204.** The processing circuitry **1202** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **1202** may further include computer executable code that controls operation of the programmable device.

The system bus **1206** may be any of several types of bus structures that may further interconnect to a memory bus (with or without a memory controller), a peripheral bus, and/or a local bus using any of a variety of bus architectures. The memory **1204** may be one or more devices for storing data and/or computer code for completing or facilitating methods described herein. The memory **1204** may include database components, object code components, script components, or other types of information structure for supporting the various activities herein. Any distributed or local memory device may be utilized with the systems and methods of this description. The memory **1204** may be communicably connected to the processing circuitry **1202** (e.g., via a circuit or any other wired, wireless, or network connection) and may include computer code for executing one or more processes described herein. The memory **1204** may include non-volatile memory **1208** (e.g., read-only memory (ROM), erasable programmable read-only memory (EPROM), electrically erasable programmable read-only memory (EEPROM), etc.), and volatile memory **1210** (e.g., random-access memory (RAM)), or any other medium which can be used to carry or store desired program code in the form of machine-executable instructions or data structures and which can be accessed by a computer or other machine with processing circuitry **1202.** A basic input/output system (BIOS) **1212** may be stored in the non-volatile memory **1208** and can include the basic routines that help to transfer information between elements within the computer system **1200.**

The computer system **1200** may further include or be coupled to a non-transitory computer-readable storage medium such as the storage device **1214,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1214** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **1214** and/or in the volatile memory **1210,** which may include an operating system **1216** and/or one or more program modules **1218.** All or a portion of the examples disclosed herein may be implemented as a computer program **1220** stored on a transitory or non-transitory computer-usable or computer-readable storage medium (e.g., single medium or multiple media), such as the storage device **1214,** which includes complex programming instructions (e.g., complex computer-readable program code) to cause the processing circuitry **1202** to carry out actions described herein. Thus, the computer-readable program code of the computer program **1220** can comprise software instructions for implementing the functionality of the examples described herein when executed by the processing circuitry **1202.** In some examples, the storage device **1214** may be a computer program product (e.g., readable storage medium) storing the computer program **1220** thereon, where at least a portion of a computer program **1220** may be loadable (e.g., into a processor) for implementing the functionality of the examples described herein when executed by the processing circuitry **1202.** The processing circuitry **1202** may serve as a controller or control system for the computer system **1200** that is to implement the functionality described herein.

The computer system **1200** may include an input device interface **1222** configured to receive input and selections to be communicated to the computer system **1200** when executing instructions, such as from a keyboard, mouse, touch-sensitive surface, etc. Such input devices may be connected to the processing circuitry **1202** through the input device interface **1222** coupled to the system bus **1206** but can be connected through other interfaces, such as a parallel port, an Institute of Electrical and Electronic Engineers (IEEE) 1394 serial port, a Universal Serial Bus (USB) port, an IR interface, and the like. The computer system **1200** may include an output device interface **1224** configured to forward output, such as to a display, a video display unit (e.g., a liquid crystal display (LCD) or a cathode ray tube (CRT)). The computer system **1200** may include a communications interface **1226** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope being set forth in the following claims.

## Claims

1. A computer system (100; 1200) comprising processing circuitry (102; 1202) configured to:
obtain sensing data (40) from a sensor (30-n) monitoring a cargo space (20) of a vehicle (10);
determine, based on the sensing data (40), that at least a portion of a cargo (24) in the cargo space (20) is moved a threshold distance (42) of the cargo space (24) during operation of the vehicle (10), the threshold distance (42) being set based on one or more of a type of cargo (24), a type of cargo space (20), and a mounting position of the sensor (30-n);
determine at least one preventive action (44) to be carried out by the vehicle (10) to prevent further movement of the cargo (24) with respect to the threshold distance (42), the at least one preventive action (44) comprising a driving route (46); and
control the vehicle (10) to at least partially carry out the at least one preventive action (44).

2. The computer system (100; 1200) of claim 1, wherein the processing circuitry (102; 1202) is configured to determine the driving route (46) by at least selecting or omitting one or more route segments (48) from the driving route (46).

3. The computer system (100; 1200) of claim 2, wherein the processing circuitry (102; 1202) is further configured to at least select or omit said one or more route segments (48) based on one or more of a vehicle type (50) of the vehicle (10), a road condition (52) for the driving route (46), topology data (54) for the driving route (46), traffic data (56) for the driving route (46), and safety and regulatory data (58) for the driving route (46).

4. The computer system (100; 1200) of any of claims 1-3, wherein the at least one preventive action (44) comprises a suspension control action (44a), a speed control action (44b), an acceleration control action (44c), a brake control action (44d), a yaw control action (44e), a turn control action (44f), an anti-slip control action (44g), or a hydraulic levelling action (44h), wherein controlling the vehicle (10) to at least partially carry out the preventive action (44) causes counteraction of further movement of the cargo (24).

5. The computer system (100; 1200) of any of claims 1-4, wherein the processing circuitry (102; 1202) is further configured to, in response to determining that at least a portion of the cargo (24) in the cargo space (20) is moved a threshold distance (42) with respect to the cargo space (24) during operation of the vehicle (10), cause emission of one or more of an audible alert, visual cue and tactile indicator.

6. The computer system (100; 1200) of any of claims 1-5, wherein the processing circuitry (102; 1202) is configured to control the vehicle (10) to at least partially carry out the at least one preventive action (44) by causing autonomous driving of the vehicle (10) to follow the determined driving route (46).

7. The computer system (100; 1200) of any of claims 1-6, wherein the processing circuitry (102; 1202) is configured to control the vehicle (10) to at least partially carry out the at least one preventive action (44) by transmitting the driving route (46) to a driver of the vehicle (10) via a user interface (18).

8. The computer system (100; 1200) of any of claims 1-7, wherein the processing circuitry (102; 1202) is further configured to determine at least one preventive action (44) to be carried out by the vehicle (10) to prevent further movement of the cargo (24) with respect to the threshold distance by identifying a discrepancy between reference sensing data, indicating an expected safe placement of the cargo (24), and the sensing data (40).

9. The computer system (100; 1200) of any of claims 1-8, wherein the sensor (30-n) monitors an outer boundary (22) of the cargo space (20), wherein the threshold distance (42) pertains to the outer boundary (22).

10. The computer system (100; 1200), of claim 9, wherein the sensor (30-n) comprises a plurality of sensors (30-1, 30-2, 30-3, 30-4), each one of the plurality of sensors (30-1, 30-2, 30-3, 30-4) monitoring a respective outer boundary (22-1, 22-2, 22-3, 22-4) comprising at least two of a first outer lateral boundary (22-1), a second outer lateral boundary (22-2) different from the first outer lateral boundary (22-2), a rear outer boundary (22-3), and a front outer boundary (22-4), wherein the threshold distance (42) pertains to each of the monitored outer boundaries (22-1, 22-2, 22-3, 22-4).

11. The computer system (100; 1200) of any of claims 1-10, wherein:
the type of cargo (24) indicates one or more of a sensitivity data (24a), weight data (24b), dimensional property data (24c), and center of gravity data (24d),
the type of cargo space (20) indicates one or more of configuration data (20a), volume data (20b), accessibility data (20c), flexibility data (20d), and surface characteristics data (20e), and
the mounting position indicates one or more of sensor height data (30a), sensor orientation data (30b), sensor proximity data (30c) to the cargo (24), and sensor field of view data (30d).

12. A vehicle (10) comprising the computer system (100; 1200) of any of claims 1-11.

13. A computer-implemented method (200), comprising:
obtaining (210), by processing circuitry (102; 1202) of a computer system (100; 1200), sensing data (40) from a sensor (30-n) monitoring a cargo space (20) of a vehicle (10);
determining (220), by the processing circuitry (102; 1202), based on the sensing data (40), that at least a portion of a cargo (24) in the cargo space (20) is moved a threshold distance (42) of the cargo space (24) during operation of the vehicle (10), the threshold distance (42) being set based on one or more of a type of cargo (24), a type of cargo space (20), and a mounting position of the sensor (30-n);
determining (230), by the processing circuitry (102; 1202), at least one preventive action (44) to be carried out by the vehicle (10) to prevent further movement of the cargo (24) with respect to the threshold distance, the at least one preventive action (44) comprising a driving route (46); and
controlling (240), by the processing circuitry (102; 1202), the vehicle (10) to at least partially carry out the at least one preventive action (44).

14. A computer program product comprising program code for performing, when executed by processing circuitry (102; 1202), the method (200) of claim 13.

15. A non-transitory computer-readable storage medium comprising instructions, which when executed by processing circuitry (102; 1202), cause the processing circuitry (102; 1202) to perform the method (200) of claim 13.

## Patentansprüche

1. Computersystem (100; 1200), umfassend eine Verarbeitungsschaltung (102; 1202), die zu Folgendem konfiguriert ist:
Erlangen von Sensordaten (40) von einem Sensor (30-n), der einen Frachtraum (20) eines Fahrzeugs (10) überwacht;
Bestimmen, basierend auf den Sensordaten (40), dass mindestens ein Teil einer Fracht (24) in dem Frachtraum (20) während des Betriebs des Fahrzeugs (10) um einen Abstandsschwellenwert (42) des Frachtraums (24) bewegt wird, wobei der Abstandsschwellenwert (42) anhand von Faktoren wie der Art der Fracht (24), der Art des Frachtraums (20) und der Montageposition des Sensors (30-n) festgelegt wird;
Bestimmen mindestens einer Präventivmaßnahme (44), die von dem Fahrzeug (10) durchzuführen ist, um eine weitere Bewegung der Fracht (24) in Bezug auf den Abstandsschwellenwert (42) zu verhindern, die Präventivmaßnahme (44) umfassend eine Fahrstrecke (46); und
Steuern des Fahrzeugs (10), um die mindestens eine Präventivmaßnahme (44) zumindest teilweise durchzuführen.

2. Computersystem (100; 1200) nach Anspruch 1, wobei die Verarbeitungsschaltung (102; 1202) konfiguriert ist, um die Fahrstrecke (46) zu bestimmen, indem sie ein oder mehrere Streckensegmente (48) aus der Fahrstrecke (46) auswählt oder weglässt.

3. Computersystem (100; 1200) nach Anspruch 2, wobei die Verarbeitungsschaltung (102; 1202) ferner konfiguriert ist, um zumindest das eine oder die mehreren Streckensegmente (48) basierend auf einem Fahrzeugtyp (50) des Fahrzeugs (10), einem Straßenzustand (52) für die Fahrstrecke (46), Topologiedaten (54) für die Fahrstrecke (46), Verkehrsdaten (56) für die Fahrstrecke (46) sowie Sicherheits- und Regulierungsdaten (58) für die Fahrstrecke (46) auszuwählen oder wegzulassen.

4. Computersystem (100; 1200) nach einem der Ansprüche 1-3, wobei die mindestens eine Präventivmaßnahme (44) eine Fahrwerksregelungsmaßnahme (44a), eine Geschwindigkeitsregelungsmaßnahme (44b), eine Beschleunigungsregelungsmaßnahme (44c), eine Bremsregelungsmaßnahme (44d), eine Gierregelungsmaßnahme (44e), eine Kurvenregelungsmaßnahme (44f), eine Antischlupfregelungsmaßnahme (44g) oder eine hydraulische Niveauregulierungsmaßnahme (44h) umfasst, wobei die Steuerung des Fahrzeugs (10), um die Präventivmaßnahme (44) zumindest teilweise durchzuführen, ein Gegensteuern einer weiteren Bewegung der Fracht (24) bewirkt.

5. Computersystem (100; 1200) nach einem der Ansprüche 1-4, wobei die Verarbeitungsschaltung (102; 1202) ferner konfiguriert ist, um als Reaktion auf ein Bestimmen, dass mindestens ein Teil der Fracht (24) in dem Frachtraum (20) während des Betriebs des Fahrzeugs (10) um einen Abstandsschwellenwert (42) in Bezug auf den Frachtraum (24) bewegt wird, eine Ausgabe eines akustischen Warnsignals oder mehrerer visueller bzw. taktiler Anzeigen zu veranlassen.

6. Computersystem (100; 1200) nach einem der Ansprüche 1-5, wobei die Verarbeitungsschaltung (102; 1202) konfiguriert ist, um das Fahrzeug (10) zu steuern, um die mindestens eine Präventivmaßnahme (44) zumindest teilweise durchzuführen, indem es ein autonomes Fahren des Fahrzeugs (10) veranlasst, um der bestimmten Fahrstrecke (46) zu folgen.

7. Computersystem (100; 1200) nach einem der Ansprüche 1-6, wobei die Verarbeitungsschaltung (102; 1202) konfiguriert ist, um das Fahrzeug (10) zu steuern, um die mindestens eine Präventivmaßnahme (44) zumindest teilweise durchzuführen, indem sie die Fahrstrecke (46) über eine Benutzeroberfläche (18) an einen Fahrer des Fahrzeugs (10) überträgt.

8. Computersystem (100; 1200) nach einem der Ansprüche 1-7, wobei die Verarbeitungsschaltung (102; 1202) ferner konfiguriert ist, um mindestens eine von dem Fahrzeug (10) durchzuführende Präventivmaßnahme (44) zu bestimmen, um eine weitere Bewegung der Fracht (24) in Bezug auf den Abstandsschwellenwert zu verhindern, indem sie eine Diskrepanz zwischen Referenz-Sensordaten, die eine erwartete sichere Platzierung der Fracht (24) angeben, und den Sensordaten (40) identifiziert.

9. Computersystem (100; 1200) nach einem der Ansprüche 1-8, wobei der Sensor (30-n) eine äußere Begrenzung (22) des Frachtraums (20) überwacht, wobei sich der Abstandsschwellenwert (42) auf die äußere Begrenzung (22) bezieht.

10. Computersystem (100; 1200) nach Anspruch 9, wobei der Sensor (30-n) eine Vielzahl von Sensoren (30-1, 30-2, 30-3, 30-4) umfasst, wobei jeder der Vielzahl von Sensoren (30-1, 30-2, 30-3, 30-4) eine jeweilige äußere Begrenzung (22-1, 22-2, 22-3, 22-4) überwacht, umfassend mindestens zwei von einer ersten äußeren seitlichen Begrenzung (22-1), einer zweiten äußeren seitlichen Begrenzung (22-2), die sich von der ersten äußeren seitlichen Begrenzung (22-1) unterscheidet, einer hinteren äußeren Begrenzung (22-3) und einer vorderen äußeren Begrenzung (22-4), wobei sich der Abstandsschwellenwert (42) auf jede der überwachten äußeren Begrenzungen (22-1, 22-2, 22-3, 22-4) bezieht.

11. Computersystem (100; 1200) nach einem der Ansprüche 1-10, wobei:
die Art der Fracht (24) eines oder mehrere der folgenden Daten angibt: Empfindlichkeitsdaten (24a), Gewichtsdaten (24b), maßlichen Eigenschaftsdaten (24c) und Schwerpunktdaten (24d),
die Art des Frachtraums (20) eines oder mehrere der folgenden Daten angibt: Konfigurationsdaten (20a), Volumendaten (20b), Zugangsdaten (20c), Flexibilitätsdaten (20d) und Oberflächeneigenschaften (20e), und
die Einbauposition eines oder mehrere der folgenden Daten angibt: Sensorhöhendaten (30a), Sensorausrichtungsdaten (30b), Sensorproximitätsdaten (30c) zu der Fracht (24) und Sensorsichtfelddaten (30d).

12. Fahrzeug (10), umfassend das Computersystem (100; 1200) nach einem der Ansprüche 1-11.

13. Computerimplementiertes Verfahren (200), umfassend:
Erhalten (210), durch eine Verarbeitungsschaltung (102; 1202) eines Computersystems (100; 1200), von Sensordaten (40) von einem Sensor (30-n), der einen Frachtraum (20) eines Fahrzeugs (10) überwacht;
Bestimmen (220), durch die Verarbeitungsschaltung (102; 1202) basierend auf den Sensordaten (40), dass mindestens ein Teil einer Fracht (24) in dem Frachtraum (20) während des Betriebs des Fahrzeugs (10) um einen Abstandsschwellenwert (42) des Frachtraums (24) bewegt wird, wobei der Abstandsschwellenwert (42) anhand von Faktoren wie der Art der Fracht (24), der Art des Frachtraums (20) und der Montageposition des Sensors (30-n) festgelegt wird;
Bestimmen (230), durch die Verarbeitungsschaltung (102; 1202) mindestens einer Präventivmaßnahme (44), die von dem Fahrzeug (10) durchzuführen ist, um eine weitere Bewegung der Fracht (24) in Bezug auf den Abstandsschwellenwert zu verhindern, die Präventivmaßnahme (44) umfassend eine Fahrstrecke (46); und
Steuern (240), durch die Verarbeitungsschaltung (102; 1202), des Fahrzeugs (10), um die mindestens eine Präventivmaßnahme (44) zumindest teilweise durchzuführen.

14. Computerprogrammprodukt, umfassend Programmcode zum Durchführen des Verfahrens (200) nach Anspruch 13, wenn er durch eine Verarbeitungsschaltung (102; 1202) ausgeführt wird.

15. Nicht-transitorisches, computerlesbares Speichermedium, umfassend Anweisungen, die, wenn sie von der Verarbeitungsschaltung (102; 1202) ausgeführt werden, die Verarbeitungsschaltung (102; 1202) veranlassen, das Verfahren (200) von Anspruch 13 durchzuführen.

## Revendications

1. Système informatique (100 ; 1200) comprenant un circuit de traitement (102 ; 1202) configuré pour :
obtenir des données de détection (40) à partir d'un capteur (30-n) surveillant un espace de chargement (20) d'un véhicule (10) ;
déterminer, sur la base des données de détection (40), qu'au moins une partie d'un chargement (24) dans l'espace de chargement (20) est déplacée à une distance seuil (42) de l'espace de chargement (24) pendant le fonctionnement du véhicule (10), la distance seuil (42) étant fixée sur la base d'un ou plusieurs éléments parmi un type de chargement (24), un type d'espace de chargement (20) et une position de montage du capteur (30-n) ;
déterminer au moins une action préventive (44) à effectuer par le véhicule (10) pour empêcher tout mouvement supplémentaire du chargement (24) par rapport à la distance seuil (42), l'au moins une action préventive (44) comprenant un itinéraire de conduite (46) ; et
commander le véhicule (10) pour qu'il effectue au moins partiellement l'au moins une action préventive (44).

2. Système informatique (100 ; 1200) selon la revendication 1, dans lequel le circuit de traitement (102 ; 1202) est configuré pour déterminer l'itinéraire de conduite (46) au moins en sélectionnant ou en omettant un ou plusieurs segments d'itinéraire (48) à partir de l'itinéraire de conduite (46).

3. Système informatique (100 ; 1200) selon la revendication 2, dans lequel le circuit de traitement (102 ; 1202) est en outre configuré pour au moins sélectionner ou omettre lesdits un ou plusieurs segments d'itinéraire (48) sur la base d'un ou plusieurs éléments parmi un type de véhicule (50) du véhicule (10), un état de la route (52) pour l'itinéraire de conduite (46), des données topologiques (54) pour l'itinéraire de conduite (46), des données de circulation (56) pour l'itinéraire de conduite (46), et des données de sécurité et de réglementation (58) pour l'itinéraire de conduite (46).

4. Système informatique (100 ; 1200) selon l'une quelconque des revendications 1 à 3, dans lequel l'au moins une action préventive (44) comprend une action de contrôle de la suspension (44a), une action de contrôle de la vitesse (44b), une action de contrôle de l'accélération (44c), une action de contrôle du freinage (44d), une action de contrôle du lacet (44e), une action de contrôle du virage (44f), une action de contrôle anti-dérapage (44g), ou une action de nivellement hydraulique (44h), dans lequel la commande du véhicule (10) pour qu'il effectue au moins partiellement l'action préventive (44) s'oppose au déplacement supplémentaire du chargement (24).

5. Système informatique (100 ; 1200) selon l'une quelconque des revendications 1 à 4, dans lequel le circuit de traitement (102 ; 1202) est en outre configuré pour, en réponse à la détermination qu'au moins une partie du chargement (24) dans l'espace de chargement (20) est déplacée d'une distance seuil (42) par rapport à l'espace de chargement (24) pendant le fonctionnement du véhicule (10), provoquer l'émission d'un ou plusieurs éléments parmi une alerte sonore, un signal visuel et un indicateur tactile.

6. Système informatique (100 ; 1200) selon l'une quelconque des revendications 1 à 5, dans lequel le circuit de traitement (102 ; 1202) est configuré pour commander le véhicule (10) afin qu'il effectue au moins partiellement l'au moins une action préventive (44) en provoquant la conduite autonome du véhicule (10) afin de suivre l'itinéraire de conduite (46) déterminé.

7. Système informatique (100 ; 1200) selon l'une quelconque des revendications 1 à 6, dans lequel le circuit de traitement (102 ; 1202) est configuré pour commander le véhicule (10) afin qu'il effectue au moins partiellement l'au moins une action préventive (44) en transmettant l'itinéraire de conduite (46) à un conducteur du véhicule (10) par l'intermédiaire d'une interface utilisateur (18).

8. Système informatique (100 ; 1200) selon l'une quelconque des revendications 1 à 7, dans lequel le circuit de traitement (102 ; 1202) est en outre configuré pour déterminer au moins une action préventive (44) à effectuer par le véhicule (10) pour empêcher tout mouvement supplémentaire du chargement (24) par rapport à la distance seuil en identifiant une divergence entre les données de détection de référence, indiquant un placement sûr prévu du chargement (24), et les données de détection (40).

9. Système informatique (100 ; 1200) selon l'une quelconque des revendications 1 à 8, dans lequel le capteur (30-n) surveille une limite extérieure (22) de l'espace de chargement (20), dans lequel la distance-seuil (42) se rapporte à la limite extérieure (22).

10. Système informatique (100 ; 1200) selon la revendication 9, dans lequel le capteur (30-n) comprend une pluralité de capteurs (30-1, 30-2, 30-3, 30-4), chacun de la pluralité de capteurs (30-1, 30-2, 30-3, 30-4) surveillant une limite extérieure (22-1, 22-2, 22-3, 22-4) respective comprenant au moins deux limites parmi une première limite latérale extérieure (22-1), une deuxième limite latérale extérieure (22-2) différente de la première limite latérale extérieure (22-1), une limite extérieure arrière (22-3) et une limite extérieure avant (22-4), dans lequel la distance seuil (42) se rapporte à chacune des limites extérieures (22-1, 22-2, 22-3, 22-4) surveillées.

11. Système informatique (100 ; 1200) selon l'une quelconque des revendications 1 à 10, dans lequel :
le type de chargement (24) indique une ou plusieurs données parmi des données de sensibilité (24a), des données de poids (24b), des données de propriétés dimensionnelles (24c) et des données de centre de gravité (24d),
le type d'espace de chargement (20) indique une ou plusieurs données parmi des données de configuration (20a), des données de volume (20b), des données d'accessibilité (20c), des données de flexibilité (20d) et des données de caractéristiques de surface (20e), et
la position de montage indique une ou plusieurs données parmi des données de hauteur de capteur (30a), des données d'orientation de capteur (30b), des données de proximité de capteur (30c) par rapport au chargement (24) et des données de champ de vision de capteur (30d).

12. Véhicule (10) comprenant le système informatique (100 ; 1200) selon l'une quelconque des revendications 1 à 11.

13. Procédé mis en œuvre par ordinateur (200), comprenant :
l'obtention (210), par le circuit de traitement (102 ; 1202) d'un système informatique (100 ; 1200), de données de détection (40) à partir d'un capteur (30-n) surveillant un espace de chargement (20) d'un véhicule (10) ;
la détermination (220), par le circuit de traitement (102 ; 1202), sur la base des données de détection (40), qu'au moins une partie d'un chargement (24) dans l'espace de chargement (20) est déplacée à une distance seuil (42) de l'espace de chargement (24) pendant le fonctionnement du véhicule (10), la distance seuil (42) étant fixée sur la base d'un ou plusieurs éléments parmi un type de chargement (24), un type d'espace de chargement (20) et une position de montage du capteur (30-n) ;
la détermination (230), par le circuit de traitement (102 ; 1202), d'au moins une action préventive (44) à effectuer par le véhicule (10) pour empêcher tout mouvement supplémentaire du chargement (24) par rapport à la distance seuil, l'au moins une action préventive (44) comprenant un itinéraire de conduite (46) ; et
la commande (240), par le circuit de traitement (102 ; 1202), du véhicule (10) pour qu'il effectue au moins partiellement l'au moins une action préventive (44).

14. Produit de programme informatique comprenant un code de programme pour réaliser, lorsqu'il est exécuté par le circuit de traitement (102 ; 1202), le procédé (200) selon la revendication 13.

15. Support de stockage non transitoire lisible par ordinateur comprenant des instructions qui, lorsqu'elles sont exécutées par le circuit de traitement (102 ; 1202), amènent le circuit de traitement (102 ; 1202) à réaliser le procédé (200) selon la revendication 13.
